Europäisches Patentamt

European Patent Office

Office européen des brevets

(19)

(11) Veröffentlichungsnummer: **0 052 180**
**B1**

(12) **EUROPÄISCHE PATENTSCHRIFT**

(45) Veröffentlichungstag der Patentschrift:
**14.12.83**

(51) Int. Cl.³: **H 04 N 3/18**, G 05 F 1/62

(21) Anmeldenummer: **81105811.4**

(22) Anmeldetag: **23.07.81**

(54) Schaltungsanordnung zum Stabilisieren der Hochspannung für Kathodenstrahlröhren.

(30) Priorität: **14.11.80 DE 3042982**

(43) Veröffentlichungstag der Anmeldung:
**26.05.82 Patentblatt 82/21**

(45) Bekanntmachung des Hinweises auf die Patenterteilung:
**14.12.83 Patentblatt 83/50**

(84) Benannte Vertragsstaaten:
**AT BE CH DE FR GB IT LI LU NL SE**

(56) Entgegenhaltungen:
**FR - A - 2 016 636**
**FR - A - 2 402 244**
**US - A - 3 040 183**
**US - A - 3 535 609**
**US - A - 3 621 123**
**US - A - 3 921 059**

(73) Patentinhaber: **GRUNDIG E.M.V. Elektro-Mechanische Versuchsanstalt Max Grundig & Co. KG., Kurgartenstrasse 37, D-8510 Fürth (DE)**

(72) Erfinder: **Krug, Helmut, Ganghoferstrasse 34a, D-8510 Fuerth (DE)**

Schaltungsanordnung zum Stabilisieren der Hochspannung für Kathodenstrahlröhren

Die Erfindung bezieht sich auf eine Schaltungsanordnung zum Stabilisieren der Hochspannung für Kathodenstrahlröhren gemäss Oberbegriff des Anspruchs 1.

Bei Kathodenstrahlröhren ist bekanntlich die Ablenkempfindlichkeit abhängig von der Höhe der anliegenden Anodenspannung. In Fernsehgeräten werden zur Erzeugung der Anodenspannung (Hochspannung) allgemein die Rückschlagimpulse der Horizontalablenkung auf die erforderliche Grösse transformiert und gleichgerichtet. Aufgrund des hohen Übersetzungsverhältnisses dieser Transformation ergibt sich zwangsläufig ein Innenwiderstand der Hochspannungsquelle von mehreren Mega-Ohm. Wird nun ein solcher Hochspannungsgenerator wegen Änderung der Bildinformation zwischen Hell und Dunkel, also mit stark unterschiedlichen Strahlströmen belastet, so ändert sich proportional mit der Hochspannung die Ablenkempfindlichkeit. D.h., dunkle Bilder werden kleiner als helle Bilder wiedergegeben.

Es ist ferner bekannt, diesen «Lupeneffekt» dadurch zu verhindern, dass die Hochspannung in einem von der Horizontalablenkung getrennten und z.B. durch Pulsbreitenregelung stabilisierten Generator erzeugt wird (Monitore der Firma Conrac). Diese Stabilisierung erfordert jedoch einen relativ hohen Aufwand.

Weiterhin ist bekannt, die dem Transformator primärseitig zugeführte Energie lastabhängig zu regeln, um konstante Bildgrösse zu erzielen (z.B. FR-A-2 431 807). Diese in heutigen Farbfernsehempfängern vorwiegend angewendete Regelung erfasst jedoch nicht den Innenwiderstand der Hochspannungsquelle und kann deshalb den beschriebenen Lupeneffekt nur teilweise kompensieren.

Aus der FR-A-2 016 636 ist eine Schaltungsanordnung zum Stabilisieren der Hochspannung für Kathodenstrahlröhren der eingangs genannten Art bekannt. Bei dieser bekannten Schaltungsanordnung ist das wesentliche Element zur Steuerung ein zusätzlicher Transduktor als veränderliche Induktivität, mit welcher die Gesamtinduktivität der Horizontalablenkung und damit die Energiespeicherung und der Rücklaufimpuls verändert werden.

Der Erfindung liegt die Aufgabe zugrunde, eine Schaltungsanordnung zum exakten Stabilisieren der Hochspannung für Kathodenstrahlröhren anzugeben, die mit wenigen zusätzlichen Bauteilen auskommt und die bei Helligkeitsänderungen auftretenden störenden Änderungen der Bildgrösse verhindert.

Diese Aufgabe wird erfindungsgemäss durch die im kennzeichnenden Teil des Anspruchs 1 angegebenen Merkmale gelöst.

Vorteilhafte Weiterbildungen der erfindungsgemässen Schaltungsanordnung ergeben sich aus den abhängigen Ansprüchen.

Durch die erfindungsgemässe Schaltungsanordnung lässt sich eine Qualitätsverbesserung von Bildwiedergabegeräten, Fernsehgeräten, Datensichtgeräten und Oszilloskopen ohne wesentliche Kostenerhöhung und grossen Aufwand erreichen. Darüber hinaus werden der Quellwiderstand des Hochspannungsgenerators praktisch unwirksam gemacht und dadurch die wegen des hohen Quellwiderstandes des Hochspannungsgenerators in Bildwiedergabegeräten und Oszilloskopen mit Kathodenstrahlröhren auftretenden Störungen in der Bildgrösse vermieden.

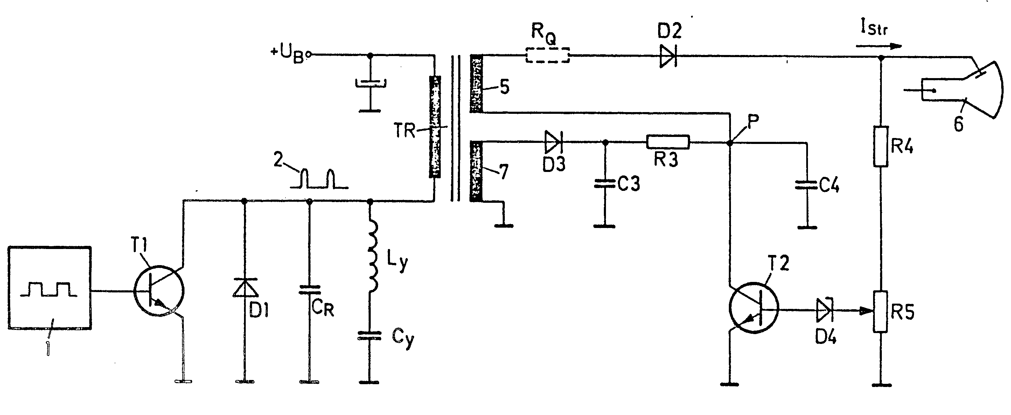

Die Erfindung wird im folgenden unter Bezugnahme auf die Zeichnung beispielsweise näher erläutert.

Das Wesen der im folgenden beispielsweise näher beschriebenen Erfindung liegt darin, dem Hochspannungsgenerator eine regelbare Hilfsspannung, deren Grösse dem momentanen Spannungsabfall am Quellwiderstand des Hochspannungsgenerators entspricht, so in Serie zu schalten, dass die Ausgangs-Summenspannung stets konstant bleibt.

Die Zeichnung stellt einen Auszug eines Schaltbildes für einen Fernsehempfänger dar, wobei nur die Endstufe für die Horizontalablenkung mit der Hochspannungserzeugung in ihren wesentlichen Elementen gezeigt ist.

Ein Transistor T1 wird von einem Impulsgenerator 1 periodisch von der Leit- in die Sperrphase geschaltet. Dadurch bildet sich in bekannter Weise in den Ablenkspulen $L_y$ ein sägezahnförmiger Strom. Während der Rücklaufzeit leigt über dem (Hochspannungs)Transformator TR der Rückschlagimpuls 2, dessen Spitzenwert etwa $10 \times U_B$ (Betriebsspannung) entspricht. Diese Impulsspannung wird sekundärseitig in einer ersten Sekundärwicklung 5 auf den für die Bildröhrenanodenspannung erforderlichen Wert hochtransformiert und mit einer Diode D2 gleichgerichtet. Das andere Ende dieser Sekundärwicklung 5 des Transformators TR liegt üblicherweise auf Bezugspotential.

Eine zweite Sekundärwicklung 7 liefert die für verschiedene Baugruppen des Fernsehempfängers erforderlichen Hilfsspannungen sowie die Focussier- und Gitter-Spannungen für die Bildröhre 6.

Für die erfindungsgemässe Hochspannungsstabilisierung wird nun aus diesen Hilfsspannungen eine Gleichspannung abgeleitet, deren Höhe dem Wert des bei maximalem Strahlstrom auftretenden Spannungsabfalls am Widerstand $R_0$ (dem Quellwiderstand) entspricht, wobei $R_0$ die zwangsläufig auftretenden Kupfer- und Streufeldverluste des Transformators TR darstellt. Auf dieses Potential wird das «kalte» Ende der Hochspannungswicklung 5 über einen Widerstand R3 gelegt. An diesem Punkt (P) ist ebenfalls der Kollektor eines Regeltransistors T2 und ein vierter Kondensator C4 angeschlossen. Der Basis des Regeltransistors T2 wird über eine Zenerdiode D4 ein geeigneter Bruchteil der Hochspannung, der von einem Spannungsteiler (Widerstände R4/R5) abgegriffen wird, zugeführt.

Bei dunklem Bild, wenn also kein Strahlstrom über den Widerstand $R_Q$ fliesst, liegt die maximale Hochspannung an der Anode der Bildröhre 6 an. Der Abgriff des Spannungsteilerwiderstands R5 ist so eingestellt, dass der Transistor T2 dann voll leitet und damit die über eine Diode D3 und einen Kondensator C3 (Glättungsglied) gewonnene Hilfsspannung über den Widerstand R3 auf Bezugspotential kurzschliesst. Somit liegt auch das «kalte» Ende der Hochspannungswicklung auf Bezugspotential und die Bildröhrenanodenspannung wird nur von der Spannung der Wicklung 5 des Transformators TR bestimmt.

Bei steigendem Strahlstrom versucht die Hochspannung wegen des Widerstands $R_Q$ zu sinken, damit wird aber der Regeltransistor T2 soweit gesperrt, dass sich am Filterkondensator C4 die fehlende Spannung aufbaut. Die Summe

$$U_{C4} + U_5 - (I_{Str} \cdot R_Q) = konstant,$$

wobei $U_{C4}$ die Spannung am Filterkondensator C4, $U_5$ die Spannung an der Wicklung 5, $I_{Str}$ den Strahlstrom und $R_Q$ den Quellwiderstand bedeuten.

Auf diese Weise wird der Einfluss des Strahlstromes auf die Höhe der Hochspannung und auf die Ablenkempfindlichkeit mit einfachen Mitteln ausgeschaltet. Die maximale Spannung $U_{C4}$ liegt bei etwa 1 bis 2 kV. Mit den heute zur Verfügung stehenden Hochvolttransistoren, z.B. BUX 87 oder BUY 71, ist diese Schaltung gut und leicht zu realisieren.

**Patentansprüche**

1. Schaltungsanordnung zum Stabilisieren der Hochspannung für Kathodenstrahlröhren, mit einer transistorisierten Schaltstufe (1, T1), einer zu dieser parallelgeschalteten Diode (D1) und einem Kondensator ($C_R$) sowie mit einem Hochspannungstransformator (TR), bei dem in einer Hochspannungswicklung (5) die erzeugte Impulsspanung auf den für die Kathodenstrahlröhre (6) erforderlichen Wert hochtransformiert und über eine Diode (6D2) gleichgerichtet wird, und mit einem über eine Zenerdiode (D4) mit der Basis eines Regeltransistors (T2) verbundenen Spannungsteiler (R4, R5) für den Hochspannungsabgriff, dadurch gekennzeichnet, dass
– der Regeltransistor (T2) kollektorseitig über einen Verbindungspunkt (P) direkt mit dem Fusspunkt einer ersten Sekundärwicklung (5) zur Erzeugung der Hochspannungsimpulse und über einen Widerstand (R3) mit einer zweiten Sekundärwicklung (7) für die Erzeugung von Hilfsspannungen verbunden ist,
– und dass der Verbindungspunkt (P) bzw. der Kollektor des Regeltransistors (T2) über einen Filterkondensator (C4) mit Masse verbunden ist.

2. Schaltungsanordnung nach Anspruch 1, dadurch gekennzeichnet, dass zwischen die zweite Sekundärwicklung (7) und den Widerstand (R3) eine Diode (D3) und parallel dazu ein Kondensator (C3) geschaltet sind.

3. Schaltungsanordnung nach Anspruch 1 oder 2, dadurch gekennzeichnet, dass die Ausgangsspannung des Hochspannungsgenerators aus der Summe mindestens zweier Teilspannungen gebildet ist, von denen mindestens eine regelbar ist.

4. Schaltungsanordnung nach Anspruch 1, 2 oder 3, dadurch gekennzeichnet, dass die regelbare Teilspannung zum «kalten» Ende der Hochspannungswicklung des Transformators (TR) in Serie geschaltet ist.

5. Schaltungsanordnung nach einem der Ansprüche 1 bis 4, dadurch gekennzeichnet, dass die Regelung in Abhängigkeit von der Hochspannung erfolgt.

6. Schaltungsanordnung nach einem der Ansprüche 1 bis 5, dadurch gekennzeichnet, dass die regelbare Teilspannung an einem Spannungsteiler abgegriffen wird, der aus einem ohmschen Festwiderstand (R4) und einem veränderlichen Widerstand (R5) besteht.

7. Schaltungsanordnung nach Anspruch 6, dadurch gekennzeichnet, dass der veränderliche Widerstand ein Halbleiter ist.

8. Schaltungsanordnung nach Anspruch 6, dadurch gekennzeichnet, dass der veränderliche Widerstand eine Vakuumröhre ist.

**Claims**

1. A circuit arrangement for stabilising the high voltage for cathode ray tubes comprising a transistorised switching stage (1, T1), a diode (D1) arranged parallel thereto and a capacitor ($C_R$) as well as comprising a high voltage transformer (TR) by which the generated pulse voltage is stepped up in a high voltage winding (5) to the value necessary for the cathode ray tube (6) and is rectified by a diode (D2) and comprising a voltage divider (R4, R5) for the high voltage tapping connected through a zener diode (D4) to the base of a control transistor (T2), characterised in that,
– the collector side of the control transistor (T2) is connected directly through a junction point (P) to the base of a first secondary winding (5) for generating the high voltage pulse and is connected through a resistor (R3) to a second secondary winding (7) for the generation of auxiliary voltages,
– and that the junction point (P) or the collector of the control transistor (T2) is connected to earth through a filter capacitor (C4).

2. A circuit arrangement according to claim 1, characterised in that, there are connected between the second secondary winding (7) and the resistor (R3) a diode (D3) and a capacitor (C3) parallel thereto.

3. A circuit arrangement according to claim 1 or 2, characterised in that, the output voltage from the high voltage generator is formed from the sum of at least two component voltages at least one of which is adjustable.

4. A circuit arrangement according to claim 1, 2 or 3, characterised in that, the adjustable component voltage is connected in series to the "cold" end of the high voltage winding of the transformer (TR).

5. A circuit arrangement according to one of claims 1 to 4, characterised in that, the adjustment takes place dependent upon the high voltage.

6. A circuit arrangement according to one of claims 1 to 5, characterised in that, the adjustable component voltage is tapped off at a voltage divider which consists of a fixed ohmic resistor (R4) and a variable resistance (R5).

7. A circuit arrangement according to claim 6, characterised in that, the variable resistance is a semiconductor.

8. A circuit arrangement according to claim 6, characterised in that, the variable resistance is a vacuum tube.

## Revendications

1. Circuit de stabilisation de la haute tension de tubes à rayons cathodiques, comportant un étage de commutation (1, T1) transistorisé, une diode (D1) montée en parallèle avec cet étage et un condensateur ($C_R$) ainsi qu'un transformateur haute tension (TR) dans lequel, dans un enroulement haute tension (5), la tension d'impulsion produite est portée par élévation à la valeur nécessaire au tube à rayons cathodiques (6) et redressée par une diode (D2); ce circuit comportant aussi un diviseur de tension (R4, R5) pour la prise de haute tension, reliée par une diode Zener (D4) à la base d'un transistor de régulation (T2), caractérisé en ce que

– le transistor de régulation (T2) est reliée directement, côté collecteur, par l'intermédiaire d'un point de liaison (P), à la base d'un premeir enroulement secondaire (5), pour produire les impulsions haute tension, et, par l'intermédiaire d'une résistance (R3), à un deuxième enroulement secondaire (7) pour la production de tensions auxiliaires,

– et en ce que le point de liaison (P) ou le collecteur du transistor de régulation (T2) est relié à la masse par l'intermédiaire d'un condensateur de filtrage (C4).

2. Circuit selon la revendication 1, caractérisé en ce qu'une diode (D3) est montée entre le deuxième enroulement secondaire (7) et la résistance (6R3) et qu'un condensateur (C3) est monté en parallèle.

3. Circuit selon la revendication 1 ou 2, caractérisé en ce que la tension de sortie du générateur haute tension est formée par la somme d'au moins deux tensions élémentaires dont l'une au moins peut être régulée.

4. Circuit selon l'une des revendications 1 à 3, caractérisé en ce que la tension élémentaire qui peut être régulée est mise en série avec l'extrémité «froide» de l'enroulement haute tension du transformateur (TR).

5. Circuit selon l'une des revendications 1 à 4, caractérisé en ce que la régulation se fait en fonction de la haute tension.

6. Circuit selon l'une des revendications 1 à 5, caractérisé en ce que la tension élémentaire qui peut être régulée est prélevée sur un diviseur de tension constitué par une résistance ohmique fixe (R4) et une résistance variable (R5).

7. Circuit selon la revendication 6, caractérisé en ce que la résistance variable est un semiconducteur.

8. Circuit selon la revendication 6, caractérisé en ce que la résistance variable est un tube à vide.